Europäisches Patentamt

(19) European Patent Office    (11) Publication number: **0 075 622**

Office européen des brevets    **A1**

(12)    # EUROPEAN PATENT APPLICATION

(21) Application number: **81304479.9**    (51) Int. Cl.³: **F 16 D 43/04**
                                              **F 16 D 43/24**

(22) Date of filing: **28.09.81**

(43) Date of publication of application:
**06.04.83 Bulletin 83/14**

(84) Designated Contracting States:
**AT BE CH DE FR GB IT LI LU NL SE**

(71) Applicant: **MEDRENO RESEARCH AND DEVELOPMENT COMPANY (PTY) LTD**
**39 Rae Frankel Street Brackenhurst**
**Alberton Transvaal(ZA)**

(72) Inventor: **Wilding, John Lawrence**
**39 Rae Frankel Street Brackenhurst**
**Alberton Transvaal(ZA)**

(74) Representative: **Howden, Christopher Andrew et al,**
**FORRESTER & BOEHMERT Widenmayerstrasse 4/I**
**D-8000 München 22(DE)**

(54) A rotary speed governor and a vibrating spade embodying such a governor.

(57) A rotary speed governor for use as a coupling between a source of rotary motion and a driven rotary machine such as a vibrating spade in which the governor comprising two interengaging co-axial parts having co-operating formations thereon in which a mechanical centrifugally operated assembly is coupled to cause disengagement of the co-operating formations on the co-axial parts to break the drive chain until such time as the speed of rotation of the parts returns to an acceptable and predetermined level at which re-engagement of the formations takes place to cause effective coupling of the co-axial parts.

FIG. 2

EP 0 075 622 A1

COMPLETE DOCUMENT

A rotary speed governor and a vibrating spade embodying such a governor

## BACKGROUND TO THE INVENTION

THIS INVENTION relates to a rotational speed governor adapted to limit the speed at which a rotary device is operated by a prime mover.

Whether a prime mover be an internal combustion engine, or alternatively, an electric motor, it is often desirable that the speed of rotation of rotary equipment driven thereby be limited, or alternatively, that the speed of rotation of the prime mover be limited in order to prevent damage thereto.

Without limiting the application of the invention in any way, it is to be mentioned that one application of particular significance is where internal combustion engines are utilised to drive rotary concrete vibrating spades of the usual type. In such an application it is desirable to limit the speed of rotation of the internal

/ ....

combustion engine in order to prevent damage thereto and, furthermore, it is desirable to limit the speed of rotation of the concrete vibrating spade vibrator shaft to a designed optimum at which vibration is most effective. In regard to the latter it is to be noted that the vibrator shaft does tend to centralise itself thereby decreasing the efficiency of the vibrator spade as the speed is increased above its designed operating range.

It is the object of this invention to provide a simple, yet effective, mechanical device for limiting at least the power transmission from a primer mover to an article of rotary equipment when the speed of rotation exceeds a predetermined value.

## SUMMARY OF THE INVENTION

In accordance with this invention there is provided a rotary speed governor comprising a driving and a driven member arranged in co-axial relationship relative to each other and wherein the driving member is adapted to be coupled to a source of rotary movement and the driven member is adapted to be coupled to an

/ ....

article of rotary equipment, releasably interengageable formations on both the driven and driving members to operatively couple them to rotate in unison when the formations are engaged, and centrifugally operated means for causing disengagement of the formations when the speed of rotation of the interengaged members exceeds a predetermined value.

Further features of the invention provide for the driven and driving members to be supported by bearings in a suitable housing therefor, for the housing to be formed at one end (being the end nearer the driving member), to be releasably coupled to a prime mover power output;  for the other end of the housing to be adapted for releasable coupling to a flexible drive shaft or the like;  and for the interengaging formations to be co-operating segmented annular faces rotatable about the axis of rotation of the driving and driven members.

Conveniently the driven member embodies the centrifugally operated means for disengaging the interengaged formations.  In the case where the interengaged formations are segmented annular end faces of the driven and driving members the said annular face of the driving

/ ....

member is conveniently provided on an axially slideable collar held in non-rotatable manner by keys or a spline for example on the driving member. The collar is urged into co-operation with the formations on the driven member by means of a helical spring carried on the driving member and the amount of axial movement is limited by a stop formation which can, conveniently, be a shoulder in the driven member which limits disengagement movement of the formations on the driving member to a position in which they are disengaged to an adequate extent from the formations on the driven member.

In the above arrangement the centrifugally operated means conveniently comprises two, three or four jointed arms pivotally attached to the collar at one end and to a suitable anchorage point on the driving member at a position spaced apart from the collar. A hinge in the central region of each arm enables the arm to be flung outwardly as a result of centrifugal force and therefore, when a predetermined speed is reached, the collar will be moved axially so that the formations disengage from those on the driven member.

The segmented co-operating annular formations which interengage could assume different forms whilst the basic arrangement of the governor remains as described.

Thus, for example, the collar could have a single laterally offset stop having an abutment surface directed circumferentially in one direction and a ramp leading up to this surface from the other direction. A co-operating member has a similar and oppositely directed abutment face so that the abutment faces co-operate only in one direction to drive the driven member but ride over each other when rotated in the opposite direction. This type of arrangement can be employed to ensure that driving takes place in one direction only and this may be of importance where certain electric motors are used as the prime mover.

A further alternative is for the collar to have one or more holes extending parallel to the axis thereof which co-operates with complementary pins projecting out of the driven member and which are spring biased to the outwardly projecting position. These pins can in fact be pushed inwardly by the collar prior to interengagement of the pins with the holes and this is considered to be advantageous in certain applications.

Whilst an axially moveable member having formations thereon to engage with those on the other

/ ....

driven or driving member is preferred, it is also possible to form one set of formations as a polygonal shaped cross-sectioned spigot fitting into a socket of complementary shape in the other member. The member or portion thereof defining the socket could be split into a plurality of relatively radially moveable portions which could be spring loaded inwardly towards each other so that centrifugal force acting on the member or portion thereof defining the socket would disengage the spigot by radial movement of the parts under centrifugal force. In this particular case it would be desirable to ensure that the parts of the member defining the socket move inwardly and outwardly relative to each other in a continuous movement in each case to avoid partial engagement of the spigot.

BRIEF DESCRIPTION OF THE DRAWINGS

In order that the invention may be more fully understood, one preferred embodiment thereof will now be described with reference to the accompanying drawings in which :-

/ ....

Fig. 1 is an isometric view of one application
of the invention;

Fig. 2 is a longitudinal sectional elevation
of the device of this invention;

Fig. 3 illustrates the driving member in
isometric view; and,

Figs. 4 and 5 illustrate, in exploded view,
two alternative types of co-operating
formations.

DETAILED DESCRIPTION OF THE DRAWINGS

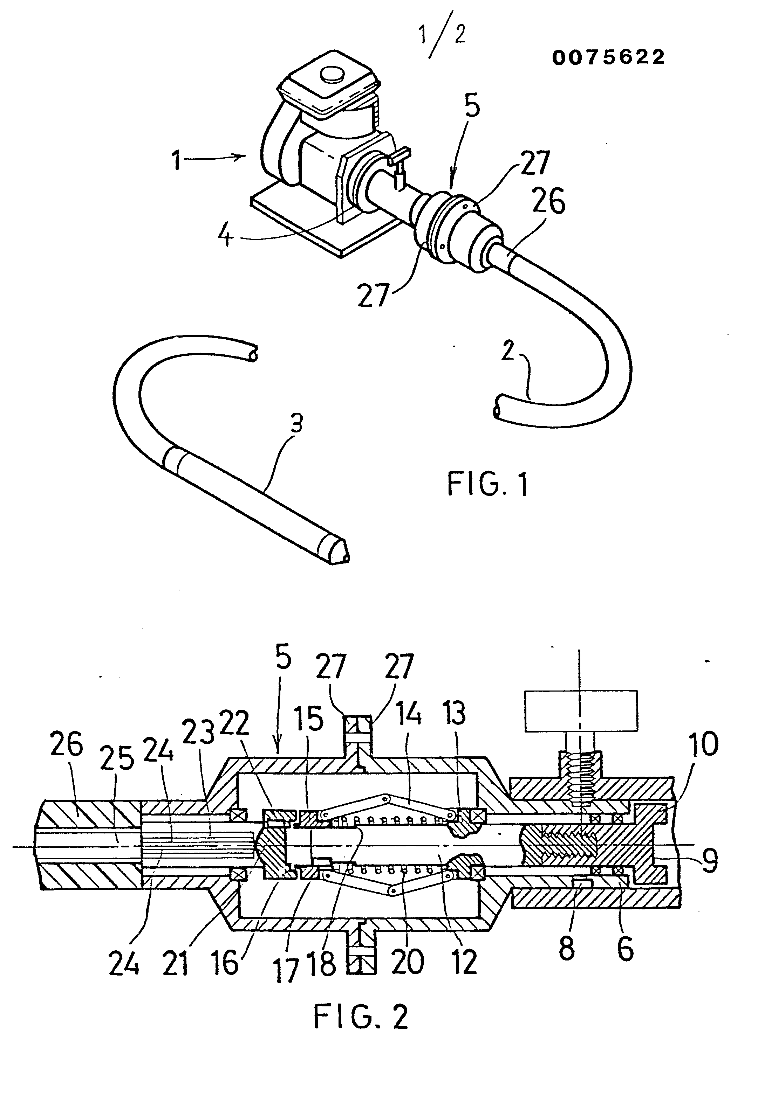

In the case of the embodiment of Figs.1 to 3
the speed limiting device or governor is applied to
the drive arrangement of a concrete vibrating spade
which is driven by means of an internal combustion
engine 1 of a portable nature.   The internal combustion
engine is connected through a flexible drive shaft 2,
in the usual way, to the vibrating spade head 3.

Interposed between the end of the flexible
drive shaft nearest the internal combustion engine and
the power output socket 4 thereof is a housing 5 containing a revolutionary speed limiting device or

/ ....

governor according to this invention.

Conveniently the end 6 of the governor nearer the engine is made to fit into the socket 4 in the conventional manner and the usual locking screw 7 can be operated to co-operate with a groove 8 in the outer surface of the spigot part of the housing.

This spigot part of the housing has rotatably mounted therein a conventional spade shaft coupling member 9 having formations 10 on an end face thereof defined by segmenting the annular end face. This is preferably achieved by dividing the annular face into six zones, three of which project to form the formations and three of which are recessed to form spaces between the formations. The power output of the engine has complementary coupling formations carried on an output drive member (not shown).

The coupling member is attached by way of a screw threaded connection 11 to a driving member 12 of the speed limiting device or governor. This member 12 preferably assumes the form of a shaft having an enlarged region 13 at its end nearer the engine in use with the enlarged regions forming the pivotal connection for one end of each of three equally angularly spaced hinged arms 14 extending along the length of the driven member.

The opposite ends of the hinged arms 14 are pivotally attached to a collar 15 which is axially slideable on an end region 16 of the driving member whilst being keyed thereto by means of suitable keys 17. Alternatively splines could be utilised for allowing this axial movement of the collar 15. The change in diameter between the reduced end region 16 of the driven member and the remainder of its length defines a shoulder 18 which limits the movement of the collar rearwardly under the influence of centrifugal force on the arms 14. The arms 14 have a hinge or pivot 19 roughly centrally located along their length so that the arm can be flung outwardly to shorten the effective length between the collar and the opposite fixed ends of the arms.

A helical compression spring 20 is located between the enlarged anchorage formation 13 and the collar to urge the collar outwardly and towards a co-axial driven member 21 also rotatably supported within the housing.

/ ...

Each of the driven member and the collar have annular faces directed towards each other whereof the faces are segmented in a manner as described above, thereby defining three projecting portions in each case and three recessed portions co-operating with each other to cause these two members to rotate, in unison when engaged.

The driven member, apart from having the formations 22 in its end face, defines a socket 23 in its interior to receive a hexagonal shaped drive pin 24 of a flexible drive shaft 25 located within the flexible housing. This flexible drive shaft assembly has a coupling member 26 at its end releasably engaging the end of the housing adjacent the driven member.

It will be understood that conveniently the housing is made in two parts which are interconnected by bolts co-operating with suitable flanges 27.

It will be understood that in use, the coupling member will drive the driving member 12 which, in turn, by way of the co-operating formations 22 in the adjacent end faces of the collar and driven member, will

/ ....

cause the driven member and thus the flexible drive shaft to rotate. As the speed increases, the centrifugal force acting on the arm 14 increases and this tends to urge the collar 15 axially along the driving member away from the driven member. At a predetermined speed, the centrifugal force is adapted to be such that disengagement occurs thereby preventing the driven member from being rotated at a speed in excess of a predetermined speed.

When the speed of the driving member decreases to a suitable extent, the collar will again be urged by means of the spring 20 towards the driven member so that the co-operating formations will again interengage. It has been found that interengaging formations as above described are eminently suitable for the purposes of this invention.

The interengaging formations on the collar and driven member could be varied as required and are not necessarily of the segment shape described above.

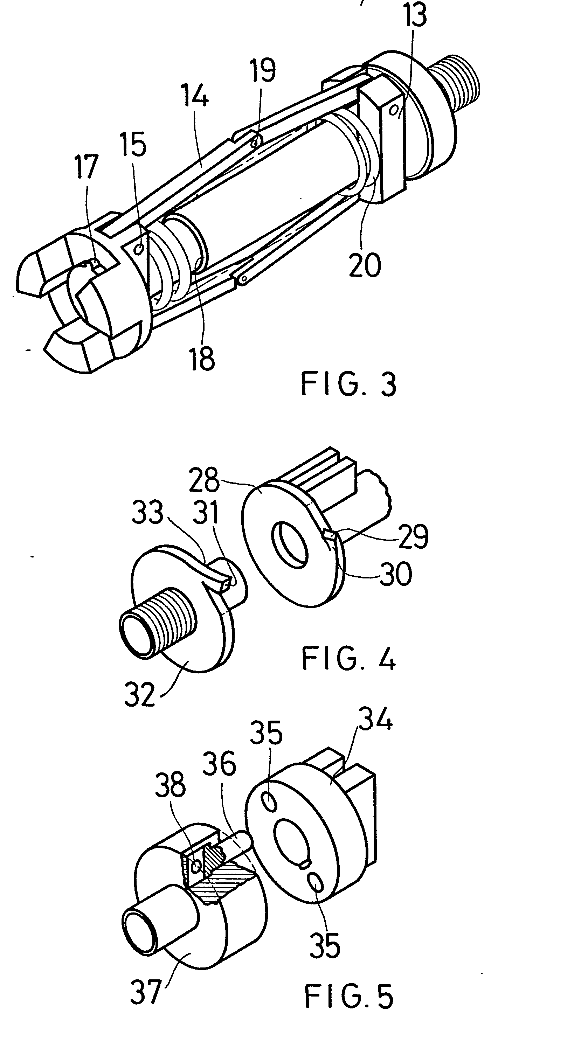

Thus, as indicated in Fig. 4 the collar 28 could simply have one radially extending abutment face 29 directed in one angular direction and with which

/ ...

an inclined face 30 communicates on the other side.
The driven member can have a similar abutment face
31 oppositely directed to co-operate with, and firmly
abut the face on the collar and both of these abutment
faces are offset such that they co-operate when the
collar and driven member are in engagement.  The
second abutment face on the driven member 32 also
has an inclined surface 33 communicating with the
abutment face 31.   It will be appreciated that the
above arrangement enables the power transmission to
take place only in one direction of rotation whereas,
in the opposite direction of rotation, the inclined
surfaces will co-operate so that the formations will
slide over each other.  This is desirable in certain
instances where electric motors are employed which
can be started in the reverse direction inadvertently.
The two members having the co-operating formations
are again spring biased towards each other and, in
particular, the collar 28 is spring biased as indicated
above.

A further alternative arrangement of formations
is illustrated in Fig. 5 in which case the collar 34 has

/ ....

a pair of diametrically opposed holes 35 extending parallel to the axis of the collar but offset from the centre thereof. A pair of spring loaded pins 36 are provided on a driven member 37 to co-operate with, and engage in the holes 35 in the collar. Compression springs 38 are employed to bias the pins 36 in an outwardly extending condition but, if the members are engaged with the pins and holes out of alignment, the pins can be pushed into the driven member against the action of the compression spring. It is envisaged that this particular arrangement will be of interest in certain applications.

It will be understood that the housing 5 of the above described speed limiting or governing device could be made integral with a part of an engine to be bolted thereto and the driving member could in fact be directly coupled to a driving member of the engine itself. However, it is generally preferred to make the governor device as a separate unit in the manner described above, since in this case the governor can be removed if required and the coupling member on the flexible drive shaft can be inserted directly into the socket on the engine. Also, the

/ ...

speed limiting device could be located intermediate the ends of the flexible drive shaft or, in fact, at the end thereof where the driven rotary unit is located.

As indicated above numerous other types of interengaging formations may be utilised which, upon attainment of a predetermined speed and therefore predetermined centrifugal force on certain elements of the device, cause disengagement mechanically of the prime mover from the driven rotary machine or the like.

/ ....

CLAIMS:

1. A rotary speed governor comprising a driving and a driven member arranged in co-axial relationship relative to each other and wherein the driving member is adapted to be coupled to a source of a rotary movement and the driven member is adapted to be coupled to an article of rotary equipment, releasably interengageable formations on both the driven and driving members to operatively couple them to rotate in unison when the formations are engaged, and centrifugally operated means for causing disengagement of the formations when the speed of rotation of the interengaged members exceeds a predetermined value.

2. A governor as claimed in claim 1 in which the

/ ....

driven and driving members are supported
by bearings in a housing therefor.

3. A governor as claimed in claim 2 in which
the driving member end of the housing is
formed to be coupled to a prime mover power
output.

4. A governor as claimed in claim 3 in which the
other end of the housing is adapted for releasable coupling to a flexible drive shaft.

5. A governor as claimed in any one of the
preceding claims in which the driven member
embodies the centrifugally operated means.

6. A governor as claimed in any one of the
preceding claims in which the interengaging
formations are co-operating segmented annular
faces rotatable about the axis of rotation of
the driving and driven means.

7. A governor as claimed in any one of claims
1 to 5 in which the formations are radial
faces co-operative in one direction of

/ ....

rotation only.

8.      A governor as claimed in any one of claims
        1 to 5 in which the formations are holes
        and complementary pins.

9.      A governor as claimed in claim 9 in which
        the pins are spring biased to project outwardly towards the member having the holes.

10.     A governor as claimed in any one of claims
        6 to 9 in which the formations are located
        on end faces of the driven and driving members.

11.     A governor as claimed in claim 10 in which the
        formations on the driving member are provided
        on an axially slideable collar held in non-
        rotatable manner on the driving member.

12.     A governor as claimed in claim 11 in which
        the collar is urged into co-operation with the
        formations on the driven member by means of
        a helical compression spring carried on the
        driving member.

/ ....

13. A governor as claimed in claim 12 in which axial movement of the collar against the spring is limited by a stop formation on the driving member, to a position in which adequate disengagement between the formations exist.

14. A governor as claimed in claim 13 in which the stop formation on the driving member is a shoulder.

15. A governor as claimed in any one of claims 12 to 14 in which the centrifugally operated means comprises a plurality of jointed arms pivotally attached to the collar at one end and to an anchorage point on the driving member spaced apart from the collar, the arm joints being pivotal tangentially to the driving member rotational axis, and the arms being adapted to be flung outwardly as a result of centrifugal force to move the collar to disengage with the co-operating formations on the driven member at a predetermined rotational speed of the driven member.

/ ....

16.    A governor as claimed in claim 1 in which
the driving member is coupled to a source of
rotary movement.

17.    A governor as claimed in claim 1 or 2 in
which the driven member is operatively coupled
to an article of rotary equipment.

18.    A governor as claimed in any one of the preceding claims in which the driving member end
is coupled to a portable motor and the driven
end is coupled to the flexible shaft of a
vibrating spade.

19.    A vibrating spade having a governor as claimed
in any one of the preceding claims operatively
coupled thereto.

1/2

0075622

FIG. 1

FIG. 2

2/2   0075622

FIG. 3

FIG. 4

FIG. 5

# European Patent Office

## EUROPEAN SEARCH REPORT

0075622

Application number

EP 81304479.9

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | <u>AT - B - 86 162</u> (AUTOMAT-INDUSTRIE--GESELLSCHAFT M.B.H.)<br><br>* Page 1, line 1 - page 2, line 15; fig. 2 * | 1,2,3, 6,10, 11,12, 15,16 | F 16 D 43/04<br>F 16 D 43/24 |
| A | <u>AT - B - 72 682</u> (L. ZEINER)<br><br>* Page 1, line 12 - page 2, line 8; fig. 1,2 * | 1,2,3, 5,6,10, 11,12, 15,16 | |
| A | <u>US - A - 3 779 354</u> (R.E. BALL)<br><br>* Column 1, line 65 - column 4, line 49; fig. 1-7 * | 1,2,3, 5,6,7, 10,12, 15,16 | TECHNICAL FIELDS SEARCHED (Int.Cl. 3) |
| A | <u>US - A - 3 319 755</u> (J.J. DIGBY)<br><br>* Column 1, line 31 - column 2, line 35; fig. * | 1,3,5, 6,7,10 12,15, 16 | F 16 D 7/00<br>F 16 D 9/00<br>F 16 D 43/00<br>F 16 C 1/00 |
| A | <u>AT - B - 222 743</u> (F. EISELE & SÖHNE)<br><br>* Page 2, line 20-52; fig. 1,2 * | 1,2,5, 15,18 | E 01 C 19/00<br>E 04 G 21/00<br>H 02 K 7/00 |

---- 

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search | VIENNA | Date of completion of the search<br>28-05-1982 | Examiner<br>ROUSSARIAN |

EPO Form 1503.1 06.78